# EUROPÄISCHE PATENTANMELDUNG

(11) **EP 1 041 803 A2**
(43) Veröffentlichungstag der Anmeldung: **04.10.2000**
(21) Anmeldenummer: 00106213.2
(22) Anmeldetag: 22.03.2000
(51) Int. Cl.: H04M 11/04

(54) **Telekommunikationsgerät**

(30) Priorität: 01.04.1999 DE 19914908
(71) Anmelder: ROBERT BOSCH GMBH, 70442 Stuttgart (DE)
(72) Erfinder: Hans, Martin, 31141 Hildesheim (DE)

(57) **Zusammenfassung**

Es wird ein Telekommunikationsgerät (1) vorgeschlagen, das eine automatische Fernüberwachung einer Raumakustik ermöglicht. Das Telekommunikationsgerät (1) umfaßt eine Wählschaltung (5), einen Rufnummernspeicher (10) und mindestens einen vorzugsweise als Mikrofon ausgebildeten akustischen Sensor (15). Es ist ein Betriebsmodus zur akustischen Raumüberwachung vorgesehen, in dem der mindestens eine akustische Sensor (15) ein akustisches Signal aus der Umgebung des Telekommunikationsgerätes (1) aufnimmt. Weiterhin ist eine Auswerteeinheit (20) vorgesehen, die aus dem aufgenommenen akustischen Signal einen Raumakustikwert ableitet. Die Auswerteeinheit (20) vergleicht den Raumakustikwert mit einem Schwellwert. Die Auswerteeinheit (20) liest in Abhängigkeit des Vergleichsergebnisses eine Rufnummer aus dem Rufnummernspeicher (10) aus und führt sie der Wählschaltung (5) zur Anwahl zu.

## Beschreibung

### Stand der Technik

Die Erfindung geht von einem Telekommunikationsgerät nach der Gattung des Hauptanspruchs aus.

Telekommunikationsgeräte mit einer Wählschaltung zur Anwahl eines Telekommunikationsteilnehmers, mit einem Rufnummernspeicher, beispielsweise für die Realisierung einer Kurzwahlfunktion, und mit einem Mikrofon in einem Handapparat sind bereits in Form von Telekommunikationsendgeräten bekannt.

### Vorteile der Erfindung

Das erfindungsgemäße Telekommunikationsgerät mit den Merkmalen des Hauptanspruchs hat demgegenüber den Vorteil, daß ein Betriebsmodus zur Raumüberwachung vorgesehen ist, in dem der mindestens eine akustische Sensor ein akustisches Signal aus der Umgebung des Telekommunikationsgerätes aufnimmt, daß eine Auswerteeinheit vorgesehen ist, die aus dem aufgenommenen akustischen Signal einen Raumakustikwert ableitet, daß die Auswerteeinheit den Raumakustikwert mit einem Schwellwert vergleicht und daß die Auswerteeinheit in Abhängigkeit des Vergleichsergebnisses eine Rufnummer aus dem Rufnummernspeicher ausliest und der Wählschaltung zur Anwahl zuführt. Auf diese Weise läßt sich eine Fernüberwachung einer Raumakustik mittels einer Telekommunikationsverbindung realisieren, die zudem keine permanent eingerichtete Verbindung zwischen dem den Raum überwachenden Telekommunikationsgerät und dem Telekommunikationsteilnehmer am anderen Ende der Verbindung erfordert. Die Fernüberwachung der Raumakustik ist somit besonders intelligent ausgeführt und beansprucht ein Minimum an Netzkapazität. Durch Verwendung einer Telekommunikationsverbindung läßt sich für die Fernüberwachung der Raumakustik eine besonders große Reichweite erzielen. Ein weiterer Vorteil wird dadurch bewirkt, daß die Funktionalität des Telekommunikationsgerätes durch Integration des Betriebsmodus zur Raumüberwachung erhöht wird, so daß das Telekommunikationsgerät vielseitiger einsetzbar ist.

Durch die in den Unteransprüchen aufgeführten Maßnahmen sind vorteilhafte Weiterbildungen und Verbesserungen des im Hauptanspruch angegebenen Telekommunikationsgerätes möglich.

Besonders vorteilhaft ist es, daß die Auswerteeinheit prüft, ob innerhalb einer zweiten vorgegebenen Zeit über die Wählschaltung eine Verbindung zu einem Telekommunikationsteilnehmer mit der angewählten Rufnummer aufgebaut wurde, und daß die Auswerteeinheit für den Fall, daß keine entsprechende Verbindung aufgebaut wurde eine weitere Rufnummer aus dem Rufnummernspeicher ausliest und der Wählschaltung zur Anwahl zuführt. Auf diese Weise wird die Wahrscheinlichkeit erhöht, daß eine zur Fernüberwachung der Raumakustik erforderliche Telekommunikationsverbindung im Bedarfsfall, d.h. beispielsweise bei Schwellwertüberschreitung durch den Raumakustikwert, eingerichtet wird.

Ein weiterer Vorteil besteht darin, daß mindestens ein Parameter für den Betrieb des Telekommunikationsgerätes im Betriebsmodus zur Raumüberwachung durch Signalisierung, vorzugsweise mittels des Mehrfrequenzwahlverfahrens (MFV) über eine bestehende Telekommunikationsverbindung einstellbar ist. Auf diese Weise ist eine Fernbedienung für den Betriebsmodus zur Raumüberwachung des Telekommunikationsgerätes über sehr große Entfernungen möglich. Der Betriebsmodus zur Raumüberwachung kann auf diese Weise weitgehend unabhängig vom Ort eines Benutzers an dessen Bedürfnisse angepaßt werden.

Ein weiterer Vorteil besteht darin, daß mindestens ein Parameter für den Betrieb des Telekommunikationsgerätes im Betriebsmodus zur Raumüberwachung über eine Eingabeeinheit des Telekommunikationsgerätes einstellbar ist. Auf diese Weise lassen sich Einstellungen für den Betriebsmodus zur Raumüberwachung auch unabhängig von einer bestehenden Telekommunikationsverbindung direkt am Telekommunikationsgerät durchführen.

### Zeichnung

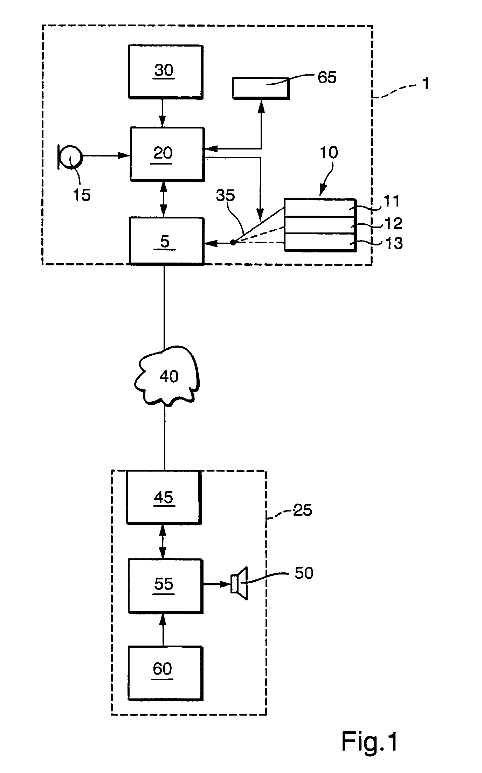

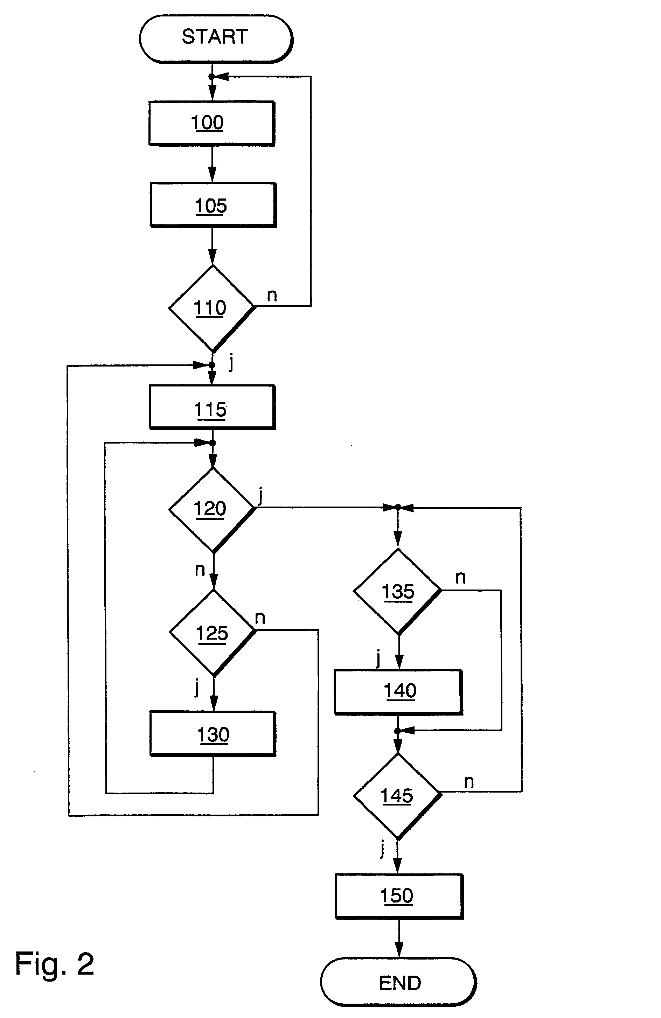

Ein Ausführungsbeispiel der Erfindung ist in der Zeichnung dargestellt und in der nachfolgenden Beschreibung näher erläutert. Es zeigen Figur 1 ein Blockschaltbild einer Telekommunikationsverbindung zwischen einem Telekommunikationsgerät und einem Telekommunikationsteilnehmer und Figur 2 einen Ablaufplan für eine Auswerteeinheit des Telekommunikationsgerätes.

### Beschreibung des Ausführungsbeispiels

In Figur 1 kennzeichnet 1 ein als Telekommunikationsendgerät ausgebildetes Telekommunikationsgerät. Das Telekommunikationsendgerät 1 kann dabei schnurlos, mobil oder schnurgebunden ausgebildet sein. Im beschriebenen Ausführungsbeispiel ist das Telekommunikationsendgerät 1 schnurgebunden ausgeführt. Es umfaßt eine Auswerteeinheit 20, an die ein als Mikrofon ausgebildeter akustischer Sensor 15 und eine erste Eingabeeinheit 30, beispielsweise eine alphanumerische Tastatur, angeschlossen sind. Über eine Wählschaltung 5 ist die Auswerteeinheit 20 an ein Telekommunikationsnetz 40 angeschlossen. Die Auswerteeinheit 20 steuert zudem im Telekommunikationsendgerät 1 einen Schalter 35, über den ein erster Speicherplatz 11, ein zweiter Speicherplatz 12 oder ein dritter Speicherplatz 13 eines Rufnummernspeichers 10 mit der Wählschaltung 5 verbindbar ist. Bei der Ausbildung des Telekommunikationsendgerätes 1 als schnurloses oder mobiles Telekommunikationsendgerät erfolgt die Verbindung von der Wählschaltung 5 über eine geeignete Sendevorrichtung und eine Sendeantenne zum Telekommunikationsnetz 40 über Funk.

In Figur 1 ist auch ein Telekommunikationsteilnehmer 25 des Telekommunikationsnetzes 40 dargestellt, der ebenfalls schnurgebunden, schnurlos oder mobil ausgebildet sein kann. Im beschriebenen Ausführungsbeispiel wird von einem schnurgebundenen Telekommunikationsteilnehmer 25 ausgegangen. Dieser umfaßt eine Steuerung 55, an die eine zweite Eingabeeinheit 60, die beispielsweise eine alphanumerische Tastatur umfaßt, und ein Lautsprecher 50 angeschlossen sind. Die Steuerung 55 ist über einen Netzanschluß 45 schnurgebunden mit dem Telekommunikationsnetz 40 verbunden. Bei Ausführung des Telekommunikationsteilnehmers 25 als schnurloser oder mobiler Telekommunikationsteilnehmer erfolgt die Verbindung zwischen dem Netzanschluß 45 und dem Telekommunikationsnetz 40 über Funk.

Das Telekommunikationsendgerät 1 ist in einem Raum angeordnet, dessen Raumakustik überwachbar sein soll. Im Raum können eine oder mehrere Schallquellen angeordnet sein, von denen akustische Signale abgegeben werden. Diese überlagern sich am Mikrofon 15 zu einem akustischen Gesamtsignal, das vom Mikrofon 15 aufgenommen und der Auswerteeinheit 20 zugeführt wird. Die Auswerteeinheit 20 leitet aus dem aufgenommenen akustischen Gesamtsignal einen Raumakustikwert nach einem vorgegebenen Algorithmus ab. Anschließend vergleicht die Auswerteeinheit 20 den ermittelten Raumakustikwert mit einem Schwellwert, der in einem der Auswerteeinheit 20 zugeordneten und mit dieser verbundenen Schwellwert-Speicher 65 abgelegt ist. In Abhängigkeit des Vergleichsergebnisses liest die Auswerteeinheit 20 dann zunächst aus dem ersten Speicherplatz 11 des Rufnummernspeichers 10 eine erste Rufnummer aus und führt sie der Wählschaltung 5 zur Anwahl zu. Der Raumakustikwert kann von der Auswerteeinheit 20 beispielsweise als Geräuschpegel des vom Mikrofon 15 aufgenommenen akustischen Gesamtsignals ermittelt werden, wobei dieser Geräuschpegel vorzugsweise über eine erste vorgegebene Zeit, beispielsweise über 60 Sekunden gemittelt ist und somit einen mittleren Geräuschpegel darstellt. Das Auslesen der ersten Rufnummer aus dem Rufnummernspeicher 10 erfolgt dann, wenn der als mittlerer Geräuschpegel ermittelte Raumakustikwert den Schwellwert überschreitet. Die Auswerteeinheit 20 veranlaßt nun die Wählschaltung 5 zur Anwahl des der ersten Rufnummer zugeordneten Telekommunikationsteilnehmers des Telekommunikationsnetzes 40. Stellt die Auswerteeinheit 20 fest, daß innerhalb einer zweiten vorgegebenen Zeit keine Verbindung zu dem der ersten Rufnummer zugeordneten Telekommunikationsteilnehmer aufgebaut wurde, sei es aufgrund der Nichtentgegennahme des Rufes durch den entsprechenden Telekommunikationsteilnehmer oder aufgrund eines Belegtzustandes dieses Telekommunikationsteilnehmers, so veranlaßt die Auswerteeinheit 20 das Auslesen der zweiten Rufnummer aus dem zweiten Speicherplatz 12 des Rufnummernspeichers 10 und dessen Anwahl durch die Wählschaltung 5. Führt auch dieser Vorgang innerhalb der zweiten vorgegebenen Zeit nicht zum Verbindungsaufbau mit dem der zweiten Rufnummer zugeordneten Telekommunikationsteilnehmer, so wird der Vorgang mit der im dritten Speicherplatz 13 des Rufnummernspeichers 10 gespeicherten Rufnummer wiederholt. Kommt es auch bei Anwahl der dritten Rufnummer innerhalb der zweiten vorgegebenen Zeit nicht zum Verbindungsaufbau mit dem der dritten Rufnummer zugeordneten Telekommunikationsteilnehmer, so kann der Vorgang der Raumüberwachung entweder abgebrochen oder zyklisch durch erneutes Auslesen und Anwählen zunächst der ersten Rufnummer aus dem ersten Speicherplatz 11 des Rufnummernspeichers 10 solange wiederholt werden, bis eine Verbindung zu einem der den Rufnummern im Rufnummernspeicher 10 zugeordneten Telekommunikationsteilnehmer erfolgreich aufgebaut ist.

Die akustische Raumüberwachung erfolgt in einem speziellen Betriebsmodus des Telekommunikationsendgerätes 1. Das Mikrofon 15 kann dabei das Mikrofon eines in Figur 1 nicht dargestellten Handapparates des Telekommunikationsendgerätes 1 sein, das zur Aufnahme des akustischen Gesamtsignals in diesem Betriebsmodus zur akustischen Raumüberwachung aktiviert wird. Es kann auch vorgesehen sein, das Mikrofon 15 außerhalb des Handapparates des Telekommunikationsendgerätes 1, ja sogar außerhalb des Telekommunikationsendgerätes 1 selbst anzuordnen. Das Mikrofon 15 könnte so an einer für die akustische Raumüberwachung besonders geeigneten Stelle des Raumes angeordnet werden. Ferner kann auch vorgesehen sein, mehrere Mikrofone zur akustischen Raumüberwachung an geeigneter Stelle im Raum vorzusehen und mit der Auswerteeinheit 20 zu verbinden. Die Auswerteeinheit 20 könnte dann aus den von den Mikrofonen empfangenen akustischen Signalen ein überlagertes akustisches Gesamtsignal bilden und daraus in der beschriebenen Weise über die erste vorgegebene Zeit den mittleren Geräuschpegel ermitteln.

Der Betriebsmodus zur akustischen Raumüberwachung kann vom Benutzer direkt am Telekommunikationsendgerät 1 über die erste Eingabeeinheit 30 aktiviert werden. Genauso kann über die erste Eingabeeinheit 30 der Schwellwert nach den Bedürfnissen des Benutzers vorgegeben werden. Je höher der Schwellwert gewählt wird, desto höher muß der von der Auswerteeinheit 20 ermittelte Raumakustikwert sein, um einen Aufbau einer Telekommunikationsverbindung über das Telekommunikationsnetz 40 zu einem Telekommunikationsteilnehmer einzuleiten und somit eine Fernüberwachung der Raumakustik zu ermöglichen.

Der in Figur 1 dargestellte Telekommunikationsteilnehmer 25 ist der ersten Rufnummer des ersten Speicherplatzes 11 zugeordnet, da der Schalter 35 aufgrund der durchgezogenen Linie gemäß einer ersten Schalterstellung den ersten Speicherplatz 11 mit der Wählschaltung 5 verbindet. In einer zweiten Schalterstellung gemäß einer gestrichelten Darstellung in Figur 1 würde der Schalter 35 den zweiten Speicherplatz 12 mit der Wählschaltung 5 verbinden. In einer dritten Schalterstellung gemäß einer strichpunktierten Darstellung nach Figur 1 würde der Schalter 35 den dritten Speicherplatz 13 mit der Wählschaltung 5 verbinden. Der Lautsprecher 50 kann der Lautsprecher eines Handapparates des Telekommunikationsteilnehmers 25 sein. Das vom Mikrofon 15 aufgenommene akustische Gesamtsignal wird bei aufgebauter Telekommunikationsverbindung zwischen dem Telekommunikationsendgerät 1 und dem Telekommunikationsteilnehmer 25 über das Telekommunikationsnetz 40 vom Telekommunikationsendgerät 1 an den Telekommunikationsteilnehmer 25 übertragen und akustisch am Lautsprecher 50 wiedergegeben. Auf diese Weise erfolgt dann die Fernüberwachung der Raumakustik beim Telekommunikationsteilnehmer 25. Die über das Telekommunikationsnetz 40 aufgebaute Verbindung ist dabei eine Sprachverbindung.

Durch Eingabe an der zweiten Eingabeeinheit 60 kann die Steuerung 55 über den Netzanschluß 45 eine Signalisierung, vorzugsweise mittels des Mehrfrequenzwahlverfahrens (MFV), einleiten, die mittels der bestehenden Telekommunikationsverbindung über das Telekommunikationsnetz 40 an die Auswerteeinheit 20 übertragen und dort ausgewertet wird. Auf diese Weise lassen sich Parameter für den Betriebsmodus zur akustischen Raumüberwachung vom Telekommunikationsteilnehmer 25 aus fernbedienbar einstellen. Bei Verwendung des Mehrfrequenzwahlverfahrens für eine solche Signalisierung umfaßt die zweite Eingabeeinheit 60 entsprechende Mehrfrequenzwahltasten. So kann über die zweite Eingabeeinheit 60 beispielsweise der Schwellwert eingestellt oder verändert und durch entsprechende Signalisierung an die Auswerteeinheit 20 übertragen werden. Die Auswerteeinheit 20 überschreibt dann den Inhalt des Schwellwertspeichers 65 mit dem durch die entsprechende Signalisierung vom Telekommunikationsteilnehmer 25 übermittelten neuen Schwellwert. Durch entsprechende Eingabe an der zweiten Eingabeeinheit 60 und die von der Steuerung 55 daraus abgeleitete Signalisierung lassen sich in entsprechender Weise auch die Rufnummern im Rufnummernspeicher 10 ändern. Alternativ können die Rufnummern im Rufnummernspeicher 10 auch direkt über die erste Eingabeeinheit 30 am Telekommunikationsendgerät 1 geändert werden. Über die zweite Eingabeeinheit 60 und eine durch die Steuerung 55 entsprechend abgeleitete Signalisierung läßt sich auch der Betriebsmodus zur akustischen Raumüberwachung am Telekommunikationsendgerät 1 vom Telekommunikationsteilnehmer 25 fernbedienbar an- und/oder abschalten.

Es kann vorgesehen sein, daß sämtliche am Telekommunikationsteilnehmer 25 vorgenommene Einstellungen zur Fernbedienung von Parametern für den Betrieb des Telekommunikationsendgerätes 1 im Betriebsmodus zur akustischen Raumüberwachung erst nach Beendigung der zwischen dem Telekommunikationsteilnehmer 25 und dem Telekommunikationsendgerät 1 bestehenden Telekommunikationsverbindung umgesetzt werden. Erst nach Beendigung dieser Telekommunikationsverbindung ist also beispielsweise ein mittels der beschriebenen Fernbedienung eingestellter neuer Schwellwert im Telekommunikationsendgerät 1 gültig.

Selbstverständlich ist die Fernbedienung des Telekommunikationsendgerätes 1 für die Einstellung von Parametern für den Betrieb des Telekommunikationsendgerätes 1 im Betriebsmodus zur akustischen Raumüberwachung nicht auf eine Telekommunikationsverbindung zu einem Telekommunikationsteilnehmer beschränkt, dessen Rufnummer im Rufnummernspeicher 10 gespeichert ist. Vielmehr kann die beschriebene Fernbedienung von beliebigen Telekommunikationsteilnehmern über das Telekommunikationsnetz 40, beispielsweise über das Mehrfrequenzwahlverfahren, erfolgen.

Das Telekommunikationsendgerät 1 kann beispielsweise in einem Raum angeordnet sein, in dem ein schlafendes Kind überwacht werden soll. Wacht das Kind auf und schreit, so daß das vom Mikrofon 15 aufgenommene akustische Gesamtsignal zu einem Raumakustikwert oberhalb des Schwellwertes führt, so wird in der beschriebenen Weise ein Verbindungsaufbau zu einem Telekommunikationsteilnehmer entsprechend den im Rufnummernspeicher 10 gespeicherten Rufnummern eingeleitet. Bei erfolgreichem Verbindungsaufbau kann dann der zu überwachende Raum abgehört werden.

Gemäß Figur 2 ist ein Ablaufplan dargestellt, der die Funktionsweise der Auswerteeineheit 20 näher erläutert. Vorausgesetzt sei dabei, daß der Betriebsmodus zur akustischen Raumüberwachung eingeschaltet ist. Bei einem Programmpunkt 100 erfolgt die Aufnahme eines akustischen Gesamtsignals über das Mikrofon 15. Anschließend wird zu einem Programmpunkt 105 verzweigt. Bei Programmpunkt 105 ermittelt die Auswerteeinheit 20 aus dem aufgenommenen akustischen Gesamtsignal als Raumakustikwert den über die erste vorgegebene Zeit gemittelten mittleren Geräuschpegel. Anschließend wird zu einem Programmpunkt 110 verzweigt. Bei Programmpumkt 110 prüft die Auswerteeinheit 20, ob der Raumakustikwert oberhalb des Schwellwertes liegt. Ist dies der Fall, so wird zu einem Programmpunkt 115 verzweigt, andernfalls wird zu Programmpunkt 100 zurückverzweigt. Bei Programmpunkt 115 veranlaßt die Auswerteeinheit 20 die Anwahl der ersten Rufnummer des ersten Speicherplatzes 11 des Rufnummernspeichers 10 über die Wählschaltung 5. Anschließend wird zu einem Programmpunkt 120 verzweigt. Bei Programmpunkt 120 prüft die Auswerteeinheit 20, ob innerhalb der zweiten vorgegebenen Zeit über das Telekommunikationsnetz 40 eine Verbindung zu dem der aktuell an gewählten Rufnummer zugeordneten Telekommunikationsteilnehmer realisiert werden konnte. Ist dies der Fall, so wird zu einem Programmpunkt 135 verzweigt, andernfalls wird zu einem Programmpunkt 125 verzweigt. Bei Programmpunkt 125 prüft die Auswerteeinheit 20, ob noch weitere Speicherplätze mit Rufnummern im Rufnummernspeicher 10 vorhanden sind. Ist dies der Fall, so wird zu einem Programmpunkt 130 verzweigt, andernfalls wird zu Programmpunkt 115 zurückverzweigt. Bei Programmpunkt 130 veranlaßt die Auswerteeinheit 20 die Wählschaltung 5 zur Anwahl der Rufnummer des nächsten Speicherplatzes im Rufnummernspeicher 10. Anschließend wird zu Programmpunkt 120 zurückverzweigt. Bei Programmpunkt 135 prüft die Auswerteeinheit 20, ob über die bestehende Telekommunikationsverbindung vom angewählten Telekommunikationsteilnehmer aus mittels einer Signalisierung, beispielsweise nach dem Merhfrequenzwahlverfahren, Parameter für den Betrieb des Telekommunikationsendgerätes 1 im Betriebsmodus zur akustischen Raumüberwachung eingestellt oder verändert wurden. Ist dies der Fall, so wird zu einem Programmpunkt 140 verzweigt, andernfalls wird zu einem Programmpunkt 145 verzweigt. Bei Programmpunkt 140 werden die vom Telekommunikationsteilnehmer fernbedienten Parameter am Telekommunikationsendgerät 1 eingestellt, ohne gleichzeitig gültig zu werden. Anschließend wird zu Programmpunkt 145 verzweigt. Bei Programmpunkt 145 prüft die Auswerteeinheit 20, ob die Telekommunikationsverbindung zwischen dem Telekommunikationsteilnehmer und dem Telekommunikationsendgerät 1 beendet wurde. Ist dies der Fall, so wird zu einem Programmpunkt 150 verzweigt, andernfalls wird zu Programmpunkt 135 zurückverzweigt. Bei Programmpunkt 150 werden die vom Telekommunikationsteilnehmer fernbedienten Einstellungen für den Betrieb des Telkommunikationsendgerätes 1 im Betriebsmodus zur akustischen Raumüberwachung validiert, d.h. gültig bzw. wirksam gemacht und sind dann für den Betrieb des Telekommunikationsendgerätes 1 im Betriebsmodus zur akustischen Raumüberwachung relevant. Anschließend wird das Programm verlassen.

## Patentansprüche

1. Telekommunikationsgerät (1) mit einer Wählschaltung (5), einem Rufnummernspeicher (10) und mindestens einem vorzugsweise als Mikrofon ausgebildeten akustischen Sensor (15), dadurch gekennzeichnet, daß ein Betriebsmodus zur akustischen Raumüberwachung vorgesehen ist, in dem der mindestens eine akustische Sensor (15) ein akustisches Signal aus der Umgebung des Telekommunikationsgerätes (1) aufnimmt, daß eine Auswerteeinheit (20) vorgesehen ist, die aus dem aufgenommenen akustischen Signal einen Raumakustikwert ableitet, daß die Auswerteeinheit (20) den Raumakustikwert mit einem Schwellwert vergleicht und daß die Auswerteeinheit (20) in Abhängigkeit des Vergleichsergebnisses eine Rufnummer aus dem Rufnummernspeicher (10) ausliest und der Wählschaltung (5) zur Anwahl zuführt.

2. Telekommunikationsgerät (1) nach Anspruch 1, dadurch gekennzeichnet, daß die Auswerteeinheit (20) bei Überschreiten des Schwellwertes durch den Raumakustikwert eine Rufnummer aus dem Rufnummernspeicher (10) ausliest und der Wählschaltung (5) zur Anwahl zuführt.

3. Telekommunikationsgerät (1) nach Anspruch 1 oder 2, dadurch gekennzeichnet, daß die Auswerteeinheit (20) als Raumakustikwert einen über eine erste vorgegebene Zeit mittleren Geräuschpegel des vom mindestens einen akustischen Sensor (15) aufgenommenen akustischen Signals ermittelt.

4. Telekommunikationsgerät (1) nach Anspruch 1, 2 oder 3, dadurch gekennzeichnet, daß die Auswerteeinheit (20) prüft, ob innerhalb einer zweiten vorgegebenen Zeit über die Wählschaltung (5) eine Verbindung zu einem Telekommunikationsteilnehmer (25) mit der angewählten Rufnummer aufgebaut wurde, und daß die Auswerteeinheit (20) für den Fall, daß keine entsprechende Verbindung aufgebaut wurde, eine weitere Rufnummer aus dem Rufnummernspeicher (10) ausliest und der Wählschaltung (5) zur Anwahl zuführt.

5. Telekommunikationsgerät (1) nach einem der vorherigen Ansprüche, dadurch gekennzeichnet, daß mindestens ein Parameter für den Betrieb des Telekommunikationsgerätes (1) im Betriebsmodus zur akustischen Raumüberwachung durch Signalisierung, vorzugsweise mittels des Mehrfrequenzwahlverfahrens (MFV), über eine bestehende Telekommunikationsverbindung einstellbar ist.

6. Telekommunikationsgerät (1) nach Anspruch 5, dadurch gekennzeichnet, daß der Betriebsmodus zur akustischen Raumüberwachung durch Signalisierung über eine bestehende Telekommunikationsverbindung an- und/oder abschaltbar ist.

7. Telekommunikationsgerät (1) nach Anspruch 5 oder 6, dadurch gekennzeichnet, daß der Schwellwert durch Signalisierung über eine bestehende Telekommunikationsverbindung einstellbar ist.

8. Telekommunikationsgerät nach Anspruch 5, 6 oder 7, daduch gekennzeichnet, daß mindestens eine Rufnummer im Rufnummernspeicher (10) durch Signalisierung über eine bestehende Telekommunikationsverbindung einstellbar ist.

9. Telekommunikationsgerät (1) nach einem der Ansprüche 5 bis 8, dadurch gekennzeichnet, daß eine Einstellung des mindestens einen Parameters entsprechend der Signalisierung über eine bestehende Telekommunikationsverbindung nach Beendigung dieser Telekommunikationsverbindung erfolgt.

10. Telekommunikationsgerät (1) nach einem der vorherigen Ansprüche, dadurch gekennzeichnet, daß mindestens ein Parameter für den Betrieb des Telekommunikationsgerätes (1) im Betriebsmodus zur akustischen Raumüberwachung über eine Eingabeeinheit (30) des Telekommunikationsgerätes (1) einstellbar ist.
